# EUROPEAN PATENT APPLICATION

(11) **EP 1 375 044 A1**
(43) Date of publication of application: **02.01.2004**
(21) Application number: 02425249.6
(22) Date of filing: 22.04.2002
(51) Int. Cl.: B23K 1/018

(54) **Device for desoldering electronic components from an electronic card or other support**

(71) Applicant: Magnetek S.p.A., 52028 Terranuova Bracciolini (Arezzo) (IT)
(72) Inventor: Salucci, Giovanni Luciano, 52028 Terranuova Bracciolini (Arezzo) (IT); Canova, Antonio, 52025 Montevarchi (Arezzo) (IT)
(74) Representative: Mannucci, Gianfranco, Dott.-Ing.

(57) **Abstract**

The device has the function of desoldering electronic components from an electronic card or other support and comprises a handpiece (3) having a tip (23) with a suction hole (27) in communication with a first suction pipe (31), which intersects a second pipe (33) for pressurized-air, oriented with respect to the first pipe (31) in such a way that the flow of air under pressure coming from said second pipe (33) generates a negative pressure in said hole; the first pipe (31) terminates in a filter (41) set on the side opposite to said suction hole.

## Description

### Technical field

The present invention relates in general to a desoldering device, i.e., a device designed for eliminating soldering spots that join an electronic component, such as, for example, an integrated circuit, an SMD component etc., to a support such as an electronic card or the like, in order to carry out repairs or other operations on electronic components.

### State of the art

In order to carry out repairs or replacement of components or for similar operations, in the electronics industry so-called desoldering devices are used, which have the function of removing the soldering spots with which the connections of the electronic components are soldered to the conducting track of the respective electronic card or other support.

These devices, whether manual or mechanized, are particularly complex, costly and problematical to use. Generally speaking, especially devices of smaller size designed for manual use are based upon a cylinder-piston system loaded by a pre-loading spring, in which the rapid movement of the piston inside the cylinder generates a suction action inside the cylinder itself, a suction action which is used to remove the metal, for instance tin or some other soldering alloy, from the soldering spots that are to be removed. Prior to its removal, the metal is heated, by means of the tip of the said device or else using a soldering gun, to bring it up to the molten state and so enable it to be sucked away. Examples of devices of this type are described in DE-A-3328326, US-A-4292706, US-A-3818539, US-A-4439667, US-A-3637129, US-A-3578948, US-A-4435636.

### Objects and summary of the invention

The object of the present invention is to provide a desoldering device of the type comprising a handpiece and a tip with a suction hole, which will prove simpler, less expensive and easier to use than the traditional devices.

The above objects and advantages, which will become apparent to persons skilled in the art from the ensuing text, are basically achieved by a device for desoldering electronic components from an electronic card or other support, comprising a handpiece having a tip with a suction hole in said tip, characterized in that the suction hole is in communication with a first pipe for suction, which intersects a second pipe for carrying pressurized-air, oriented with respect to the first pipe in such a way that the flow of air under pressure coming from said second pipe generates a negative pressure in said hole.

In practice, the flow of air under pressure coming from the second pipe has a high velocity component oriented parallel to the axis of the first pipe and in a direction such as to move away from said tip. Consequently, when air is introduced under pressure into the second pipe, it is introduced into the first pipe, so generating a negative pressure between the area of intersection of the first and second pipes and the tip of the device, through the hole of which the soldering debris are consequently sucked away.

It will be understood that a device thus conceived is extremely simple and compact, in addition to being easy to use, as compared to desoldering devices of a currently known type, which comprise a large number of components or else need to be manually loaded by the operator, who has to press an actuating spring.

The device according to the present invention does not require any intervention on the part of the operator, other than that of pressing a push-button or other suitable means for activating suction, and does not require any moving mechanical parts. It simply requires a compressed-air line (which is normally present in any workshop in which a device of this type is likely to be used), or else a small portable compressor provided with a tank having a capacity of at least one litre.

Advantageously, the first suction pipe may be associated to a filter on the side of the suction pipe opposite to said suction hole of the tip.

In order to achieve an adequate effect of generation of negative pressure in the suction hole, it is advantageous to cause the axis of the end portion of the second pipe (i.e., the part thereof that fits into the first pipe) to form an angle of between 5° and 20°, and preferably between 10° and 15°, with the axis of the first pipe, so as to improve suction and reduce acoustic noise.

The second pipe may consist of a single portion, for example a rectilinear portion. However, according to the preferred embodiment of the present invention, the second pipe has two portions, one inclined with respect to the other, the first of which is connected to a source of compressed air and the second of which intersects the first pipe. For example, the first portion of the second pipe may be arranged so that it is oriented substantially parallel to said first pipe. In general, the inclination will be such as to enable the inlet of the second pipe and the outlet of the first pipe to be on the same side of the handpiece. In this way, the compressed-air line will be away from the working area, i.e., away from the tip of the handpiece, in any case maintaining a compact structure of the handpiece and not hindering use of the device.

According to an advantageous embodiment of the invention, the suction hole of the tip has a diameter that increases from one outlet end towards the outside of said tip to a connection end to said first pipe. In practice, the hole may have an internal wall shaped like a truncated cone. This favours outflow of the debris that is drawn in by suction, even when the tip itself is not heated, and the soldering debris will tend to solidify as soon as it enters the flow of air sucked in from outside. The use of the device is thus rendered more efficient, and any over-rapid accumulation of debris on the tip of the device is prevented, and/or removal thereof, using suitable mechanical implements, is facilitated.

In practice, the device advantageously comprises a compressed-air source, a pipe for connecting the compressed-air source to the handpiece and more precisely to the second pipe thereof, and a shutoff valve, which can be controlled, between said compressed-air source and said second pipe. Advantageously, there may be set an actuation member on the handpiece for operating said shutoff valve, even though alternative solutions are possible, for example a foot control. To reduce the opening time of the valve on the compressed-air line to a minimum, according to a particularly advantageous embodiment of the invention, associated to the shutoff valve is a timer, which closes the shutoff valve after a pre-set time interval, following upon opening of the valve by an appropriate push-button, foot control or other control member.

The tip of the device may be cold, in which case the device will be used in combination with a soldering gun or other heat source for melting the soldering spots. Alternatively, the tip of the device may be heated, to be used also as an element for melting the soldering spots to be removed.

Further advantageous features and embodiments of the device according to the present invention are set forth in the attached claims and will be described in greater detail with reference to a non-limiting example of the invention.

### Brief description of drawings

A better understanding of the present invention will be obtained from the ensuing description and the attached drawings, which are provided purely by way of non-limiting practical example. In the drawing:

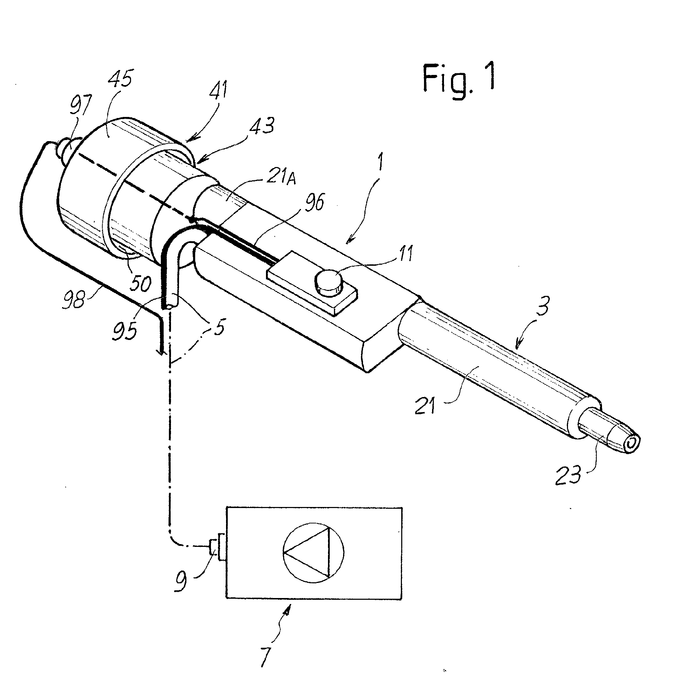

Fig.1 is a perspective view of the handpiece according to the invention, connected to a compressed-air source represented schematically;

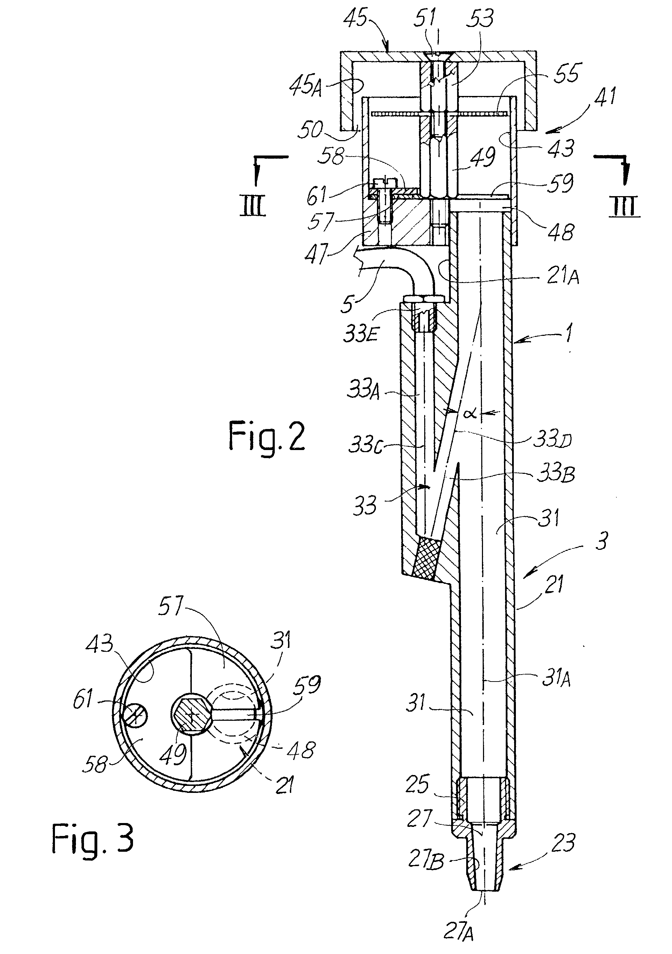

Fig.2 is a longitudinal cross section of the handpiece;
Fig.3 is a cross section of the handpiece taken along the line III-III of Fig.2;
Fig.4 is a cross section of a cleaning accessory taken along the line IV-IV of Fig.5;
Fig.5 is a plan view of the cleaning accessory taken along the line V-V of Fig.4; and
Fig.6 is a longitudinal cross section of the end part of the handpiece modified by introducing an element for heating the tip.

### Detailed description of the preferred embodiment of the invention

The device, designated as a whole by 1, comprises a handpiece, designated as a whole by 3, connected by means of a compressed-air line 5 to a compressor 7. Set on the line 5 is a solenoid valve 9, the opening of which is controlled by means of a push-button 11, set on the handpiece 3, and the closing of which is controlled by means of a timer, so that the valve shuts off the compressed-air line 5 after a pre-set time interval, which may possibly be modified, from the instant in which the push-button 11 is pressed. The electrical connection between the push-button 11 and the control circuit (not shown) of the solenoid valve 9 is obtained by means of a cable which runs along the compressed-air line 5, on the outside of the latter.

The handpiece 3 comprises a main body 21, which ends with a tip 23, constrained to the body 21 by means of a screw thread 25. The tip 23 has a through suction hole 27, which comes out in 27A at the end of the tip 23. The end part of the hole 27, i.e., the part closest to the outlet 27A, is delimited by an internal surface 27B with a conical development.

The suction hole 27 is in communication with a first suction pipe 31, made inside the body 1 of the handpiece 3. The first suction pipe 31 has a substantially rectilinear development from the tip 23 up to an appendage 21A of the body 21 of the handpiece 3, opposite to the tip 23. Designated by 31A is the geometrical axis of the pipe 31, this axis coinciding with the axis of the tip 23.

Into the first suction pipe 31 there gives out a second pipe for compressed air, designated as a whole by 33, which is also made inside the body 21 of the handpiece 3. The second pipe 33 for compressed air has two stretches or portions, one marked by 33A and the other by 33B. Designated by 33C is the geometrical axis of the portion or stretch 33A of the pipe 33, whilst designated by 33D is the geometrical axis of the portion or stretch 33B of the pipe 33. Both of the portions 33A and 33B have a substantially rectilinear development. The axis 33D of the portion 33B of the pipe 33 forms an angle α with the axis 31A of the first pipe 31. The angle α is advantageously comprised between 5° and 20°, and in the example illustrated has a value of approximately 12°.

The end of the portion 33A of the pipe 33 ends with a thread 33E, in which the hose forming the compressed-air line 5, connected to the compressor 7, engages. In this way, when the solenoid valve 9 is open, through the second pipe 33 for compressed air there is generated a flow of air, which is deviated in the area of intersection of the portions 33A, 33B forming the second pipe 33 and is fed into the first pipe 31 with an angle α with respect to the pipe 31 itself. As may be noted in the drawing, the diameter of the first suction pipe 31 is substantially larger than the diameter of the second pipe for compressed air 33. For instance, the diameter of the pipe 33 may be approximately half the diameter of the pipe 31.

Fitted on the appendage 21A of the body 21, where the suction pipe 31 terminates, is a filter, designated as a whole by 41. The filter 41 comprises a housing formed by a body 43 and a lid 45. The body 43 has a cylindrical side wall with a bottom 47 provided with a hole 48, which fits on the end portion 21A of the body 21 of the handpiece 3. From the bottom 47 of the housing body 43 there develops a column 49, in which a screw 51 engages for fastening the lid 45 of the housing. Between the cylindrical side wall of the body 43 and the cylindrical side wall 45A of the lid 45, which has a larger diameter than does the former one, there develops an annular outlet port 50 of the filter.

Extending from the top wall of the lid 45 is a respective column 53, through which there extends the screw 51 and which, in the mounted condition, is set coaxially to the column 49. When the lid 45 is fastened on the body 43 of the housing by tightening the screw 51, a filtering screen 55 is clamped between the columns 49 and 53, said filtering screen 55 being formed, for example, by a cup made of microstretched sheet metal plate or the like.

Clamped on the bottom 47 of the body 43 is a flexible annular membrane 57, which is cut along a radius (in 59). The membrane 57 is mounted in such a way that the radial interruption 59 comes to occupy a position above the hole 48, in which the end portion 21A of the body 21 fits. The membrane 57 is fixed by means of a screw 61 to the bottom 47 of the body 43 of the housing of filter 41. The membrane 57 forms a sort of non-return valve for the purposes described hereinafter. Set between the head of the screw 61 and the membrane 57 is a semi-discoidal element 62; said element has the function of preventing breaking of the membrane 57 when the screw 61 is being inserted.

Operation of the device presented so far is described in what follows. When an electronic component is to be unsoldered, using the tip of an ordinary soldering gun the soldering spot is heated until the tin or other soldering alloy used melts. At the same time, the tip 23 of the device 1 is brought into the vicinity of the soldering spot. Once the soldering alloy has been brought up to complete melting, the operator actuates the solenoid valve 9 by pressing the push-button 11, thus sending a flow of compressed air through the second pipe for compressed air 33. The flow of compressed air which passes through the pipe 33 undergoes a deviation as it passes from the portion 33A to the portion 33B and penetrates into the first suction pipe 31 with a modest inclination with respect to the axis of the latter and with a strong velocity component oriented from the tip 23 to the end 21A opposite thereto of the handpiece 21. In this way, in the part of the first suction pipe 31, between the point of entry of the pipe 33 and the tip 23, a suction pressure is generated which, through the hole 27 in the tip 23, sucks in the soldering alloy that has been brought up to melting point inside the suction pipe 31 through the hole in the tip 23.

The above causes the soldering alloy to come away from the card, thus freeing the component which needs to be removed. As it flows through the suction pipe 31, the melted material solidifies again and arrives, in the form of solid debris, in the housing of the filter 41. The debris is intercepted by the filtering screen 55 and is hence not drawn along by the flow of air that comes out of the filter 41 through the annular port 50. The outcoming flow of air is oriented downwards, i.e., towards the working area, and, for this reason, does not disturb the operator. The membrane 57 with the slit 59, which forms the non-return valve, prevents the debris entrapped by the filtering screen 55 from dropping towards the working area through the suction pipe 31, once the flow of air generated by the compressor 7 is interrupted by the valve 9, and hence the effect of drawing of the debris by suction along the pipe 31 ceases.

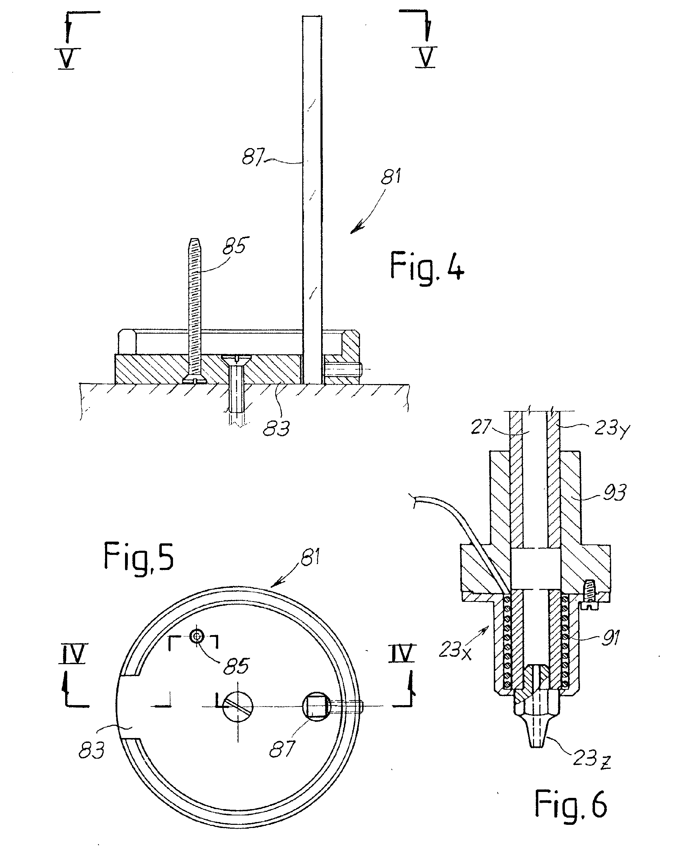

Figs 4 and 5 illustrate a supporting and cleaning accessory of the device described above. The accessory, which is designated as a whole by 81, has a base 83 which, in the example illustrated, assumes a disk-like shape. Projecting upwards from the base 83 is a first stem 85, provided with a helical surface projection for scraping. The diameter of this projection is approximately the same as the diameter of the inlet 27A of the suction hole 27 made in the tip 23 of the device 1. When the stem 85 (which, in practice, may simply consist of a screw) is inserted in the hole 27, the latter is cleaned free of any soldering-alloy debris that might have been deposited and have solidified on the inlet 27A and in the initial portion of the hole 27. The device 1 may be rested on the accessory 81 by simply fitting it on the stem 85, thus obtaining cleaning of the inlet 27A of the hole 27 each time the device is put down by the operator. The debris that has been detached by means of the stem 85 from the inlet 27A of the hole 27 can be left to drop out of the device, or else can be sucked in by actuating the solenoid valve 9 for the pre-set time by pressing the push-button 11.

Constrained to the base 83 and projecting upwards parallel to the stem 85 is a second stem 87, which is also provided with a helical surface projection for scraping. The diameter of the helical projection of the stem 87 is approximately the same as the internal diameter of the first suction pipe 31. This second stem 87 is used for cleaning the suction pipe 31 for removing therefrom any soldering-alloy debris that might have solidified on its internal wall. For this purpose, the tip 23 must be removed from the body 21 of the handpiece 3 to enable penetration of the stem 87.

Fig.6 illustrates a tip 23X, which is alternative to the tip 23 and which can be mounted on the body 21 of the handpiece 3. This tip has a sleeve 23A, through which the suction hole, again designated by 27, develops. The distal end 23Z of the tip 23X consists of an interchangeable element. Wound coaxially around the end portion of the tip 23X is an electrical resistance 91, which has the function of heating the end part of the tip 23X and, in particular, the portion 23Z. A thermally insulating sleeve 93 forms a thermal bridge between the electrical resistance 91 and the sleeve 23Y for fitting the tip 23X on the body 21 of the handpiece 3, thus preventing overheating of the said handpiece. With a tip of this type, melting of the soldering spot to be removed is obtained without separate use of a soldering gun, but with the desoldering device itself. The operation is thus, on the one hand, simplified, in so far as the operator has one hand free, but, on the other hand, in certain cases, it proves more critical, because the heated tip 23X (if not carefully manoeuvred by the operator) could damage the conducting track of the electronic card from which the electronic component has to be removed. With the use of a tip of this type, it is not necessary to carry out cleaning of the inlet 27A of the suction hole 27, in so far as the soldering-alloy debris cannot form any encrustation thereon. The end part 23Z of the tip is interchangeable since it is subject to wearing out rapidly on account of the high operating temperature.

For evident reasons of safety, the device forming the subject of the present invention must not enter into operation unless the lid 45 has been inserted. A switch may be associated to this lid, set in series with the push-button 11. The said switch opens the circuit when the lid 45 is removed. In practice, this safety device can be implemented as described in what follows. The solenoid valve 9 is connected to the two terminals of the push-button 11, which effects closing of the solenoid valve as described hereinafter. One of the two contacts of the push-button 11 is connected directly by a cable 95 to the solenoid valve 9, whilst the other contact of the push-button 11 is electrically connected by a cable 96 to the support 49, which, in turn, is electrically connected to the support 53 by means of the screw 51. A spade terminal is screwed externally under the head of the screw 51. Connected to this spade terminal 97 is a cable 98, which in turn is connected to the other terminal of the solenoid valve in order to complete the circuit for activation for opening of the solenoid valve itself. It is thus ensured that removal of the lid 45 will prevent supply of compressed air to the device.

It is understood that the drawings only show a simplification, provided purely by way of practical demonstration of the invention, it being possible for said invention to vary in the embodiments and arrangements, without thereby departing from the sphere of the underlying idea. The possible presence of reference numbers in the ensuing claims has the purpose of facilitating reading thereof, with reference to the description and the drawings, and in no way limits the scope of protection, represented by the attached claims.

## Claims

1. A device for desoldering electronic components from an electronic card or other support, comprising a handpiece (3) with a tip (23), with a suction hole (27) in said tip, **characterized in that** said suction hole (27) is in communication with a first suction pipe (31), which intersects a second pipe (33) for pressurized-air, oriented with respect to the first pipe (31) in such a way that the flow of air under pressure coming from the second pipe (33) generates a negative pressure in said hole.

2. The device according to Claim 1, **characterized in that** said first suction pipe (31) terminates in a filter (41) set on the side opposite to the suction hole (27).

3. The device according to Claim 1 or Claim 2, **characterized in that** the axis (33D) of the end portion (33B) of the second pipe (33) forms with the axis (31A) of the first pipe (31) an angle of between 5° and 20°, and preferably one of between 10° and 15°.

4. The device according to one or more of the preceding claims, **characterized in that** said second pipe has two portions (33A, 33B) inclined with respect to one another, the first portion being connected to a pressurized-air source (7) and the second portion intersecting said first pipe (31).

5. The device according to Claim 4, **characterized in that** the first portion (33A) of said second pipe (33) is oriented substantially parallel to said first pipe (31), so that the inlet of the second pipe (33) and the outlet of the first pipe (31) are on the same side of the handpiece (3).

6. The device according to one or more of the preceding claims, **characterized in that** the suction hole (27) in said tip (23) has a diameter that increases from one outlet end (27A), towards the outside of said tip, to an end for connection to said first pipe.

7. The device according to one or more of the preceding claims, **characterized in that** said first pipe and said second pipe are made of a single piece, which forms the main body (21) of said handpiece.

8. The device according to one or more of the preceding claims, **characterized in that** said first pipe has a cross section greater than said second pipe.

9. The device according to one or more of the preceding claims, comprising a pressurized-air source (7), a hose (5) connecting the pressurized-air source (7) to said second pipe (33), and a controllable shutoff valve (9) between said pressurized-air source and said second pipe.

10. The device according to Claim 9, **characterized in that** set on said handpiece is an actuating member (11) for operating said shutoff valve.

11. The device according to Claim 9 or Claim 10, **characterized in that** said shutoff valve (9) is associated to a timer, which closes the shutoff valve after a pre-determined time interval following upon opening of the valve.

12. The device according to at least Claim 2, **characterized in that** said filter (41) comprises a housing (43, 45) with an inlet port (48) in communication with said first pipe (31) and an outlet port (50) in communication with the outside environment, there being set a filtering screen (55) between said inlet port and said outlet port.

13. The device according to Claim 12, **characterized in that** set between said filtering screen (55) and said inlet port (48) is a valve (57), which enables passage of a flow of air that draws the soldering residue from said first pipe towards said filtering screen and prevents said residue from dropping back into said first pipe.

14. The device according to Claim 12 or Claim 13, **characterized in that** said outlet port (50) is oriented towards the tip (23) of the device.

15. The device according to Claim 14, **characterized in that** said outlet port is delimited by a side wall of the body (43) of said housing and by a lid (45) for closing said housing, said closing lid comprising an annular collar, which surrounds the side wall of the body of said housing.

16. The device according to Claim 15, **characterized in that** said lid (45) for closing the housing of the filter (41) is constrained to the housing by means of a central pin (51), which also clamps said filtering screen (55) in position.

17. The device according to one or more of the preceding claims, **characterized in that** said tip (23X) is heated to cause melting of the metal forming the solder to be removed.

18. The device according to one or more of the preceding claims, **characterized in that** said tip (23X) is applied to the handpiece in a reversible way.

19. The device according to one or more of the preceding claims, **characterized in that** it is equipped with a cleaning accessory (81) for removal of soldering-material debris from the suction hole (27) and/or from the first pipe (31).

20. The device according to Claim 19, **characterized in that** said cleaning means comprise at least one stem (85; 87) provided with surface scraping projections.

21. The device according to Claim 20, **characterized in that** it comprises a first stem (85) and a second stem (87), both provided with respective surface scraping projections.

22. The device according to Claim 20 or Claim 21, **characterized in that** said surface scraping projections have a helical development.

23. The device according to Claim 20, 21 or 22, **characterized in that** said stem or stems are fixed to a supporting base (83).

24. The device according to Claim 12, **characterized in that** it comprises a safety device that prevents supply of air flow in the event of absence of the lid (45) of said housing.

25. The device according to Claims 9 and 24, **characterized in that** it comprises a contact (97) on the circuit of the solenoid valve (9), which is opened to enable removal of the lid (45).
